# NEW EUROPEAN PATENT SPECIFICATION

(11) **EP 3 894 132 B2**
(45) Date of publication and mention of the opposition decision: **20.08.2025**
(45) Mention of the grant of the patent: 26.10.2022
(21) Application number: 19728733.7
(22) Date of filing: 29.04.2019
(51) Int. Cl.: B23Q 3/12, B24B 23/02, B24B 45/00, B26D 7/26, B27B 5/32

(54) **AN ELECTROSPINDLE**
ELEKTROSPINDEL
ÉLECTRO-BROCHE

(30) Priority: 23.01.2019 IT 201900001027
(43) Date of publication of application: 20.10.2021
(73) Proprietor: SACCARDO GCF S.R.L., 36015 Schio (VI) (IT)
(72) Inventor: SACCARDO, Francesca, 36014 Santorso (VI) (IT)
(74) Representative: Trentin, Michele
(86) International application number: PCT/IB2019/053480
(87) International publication number: WO 2020/152511

(56) References cited:
- EP-A1- 2 065 126
- EP-B1- 2 479 001
- CN-A- 107 263 177
- CN-Y- 2 774 730
- US-A- 5 810 533
- US-A- 6 042 461
- US-B1- 6 354 605
- US-B2- 9 314 853

## Description

### Field of application

The present invention is applicable to the field of industrial machining operations and, in particular, concerns machine tools.

More in detail, the present invention relates to an electrospindle for industrial machining operations.

### Background art

It is known that material machining operations in the industrial field now take place almost exclusively by electric tools. Operations such as cutting, bending, milling, drilling or other, in fact, typically take place by means of special machines equipped with the appropriate tools to perform the machining.

Among these machines, there are numerous cases in which they comprise electrospindles, i.e. mechanical devices on which a self-centering device can be mounted which allows a tool to be dragged in rotation in order to be able to perform a certain type of machining with it.

This tool is typically held in position by the head of the electrospindle. The latter is associated with the free end of the motor shaft of the electrospindle and comprises two flanges which hold the tool necessary for machining between them. More in detail, a flange is integral with the motor shaft, while a counterflange is pushed against the flange by a nut screwed to the free end of the motor shaft.

Moreover, in some variants, the free end of the motor shaft also has a threaded blind hole which extends along the longitudinal development axis of the shaft and which receives, by screwing, a second tool.

EP 2 065 126 A1 discloses an electrospindle according to the preamble of claim 1.

This configuration, although useful and functional, has some drawbacks.

First of all, the blind hole for receiving the second tool is exposed to dirt and damage when it is not used and this often forces the replacement of the entire motor shaft.

In general, moreover, the entire head of the electrospindle is subjected to considerable stresses and such as to expose to the risk of damaging the free end of the motor shaft. Moreover, typically this free end protrudes from the head, subjecting it to further risk of damage. In all such cases it is necessary to replace the shaft.

Given the stresses to which it is subjected, the motor shaft is generally made of high-quality material so its replacement is expensive. Moreover, with regard to the damage to its free end, typically it would be sufficient to harden it, but the machining operation to which it should be subjected would render it unusable as a motor shaft.

It is also known that the motors have their own sense of rotation (right-handed or left-handed). The threads of the nut and of the free end of the motor shaft, as well as those of the blind hole and of the additional tool, must be in accordance with these directions of rotation, resulting in the presence of different motor shafts, i.e. one for each combination of rotation of motor and tools. The user who wants to be able to use any of these combinations should therefore have different motor shafts and replace them with one another according to the machining need.

### Presentation of the invention

The object of the present invention is to overcome at least partially the drawbacks described above by providing an electrospindle in which the motor shaft is more protected in order to limit its replacement.

In particular, an object of the present invention is to provide an electrospindle in which the free end of the motor shaft is protected from dirt and violent stresses.

Another object is to provide an electrospindle which does not require the replacement of the motor shaft when the rotation direction of the motor varies.

These objects, as well as others which will be better understood below, are achieved by an electrospindle according to one or more of the following claims, which are an integral part of the present invention.

In particular, the electrospindle comprises a motor for moving a tool and a motor shaft for transmitting motion from the motor to the tool. It also includes a gripping head of the tool, also for coupling the latter to the motor shaft. In this sense, the head in turn comprises two flanges between which a portion of the tool and at least one thrust nut of a first flange towards the counterflange can be interposed so as to hold the tool in position.

According to an aspect of the invention, the electric tool also comprises an insert coupled by screwing to the free end of the motor shaft, the thrust nut being coupled on at least one end portion of the insert.

Advantageously, therefore, the insert in the substance functionally replaces the motor shaft in its functional terminal part. In other words, the terminal exposed part is no longer constituted by the free end of the motor shaft, but by the insert. The component exposed to damage and dirt is therefore advantageously the insert and not the motor shaft.

Still advantageously, therefore, in the event of damage or deterioration, the replacement of the insert is easier and less expensive not only in terms of operation time and downtime, but also in terms of materials.

Still advantageously, the insert can be made of the most suitable material for its exposed positioning. In particular, it can be made with a less expensive material than the motor shaft and suitably hardened.

Its coupling by screwing to the motor shaft allows to obtain an advantageously stable but low-cost coupling.

As stated, the prior art provides for the presence of different motor shafts in accordance with the combinations of the rotation directions of the motor and of the tools. On the contrary, the present invention allows to use a single motor shaft and to provide different inserts in accordance with the aforementioned rotation directions. Advantageously, therefore, the replacement of an insert with another suitable for the new rotation combination is certainly faster and simpler. Moreover, still advantageously, also the operation costs are decreased.

### Brief description of the drawings

Further features and advantages of the invention will be more evident in light of the detailed description of some of the preferred but not exclusive embodiments of an electrospindle according to the invention, illustrated by way of non-limiting example with the aid of the accompanying drawing tables, wherein:

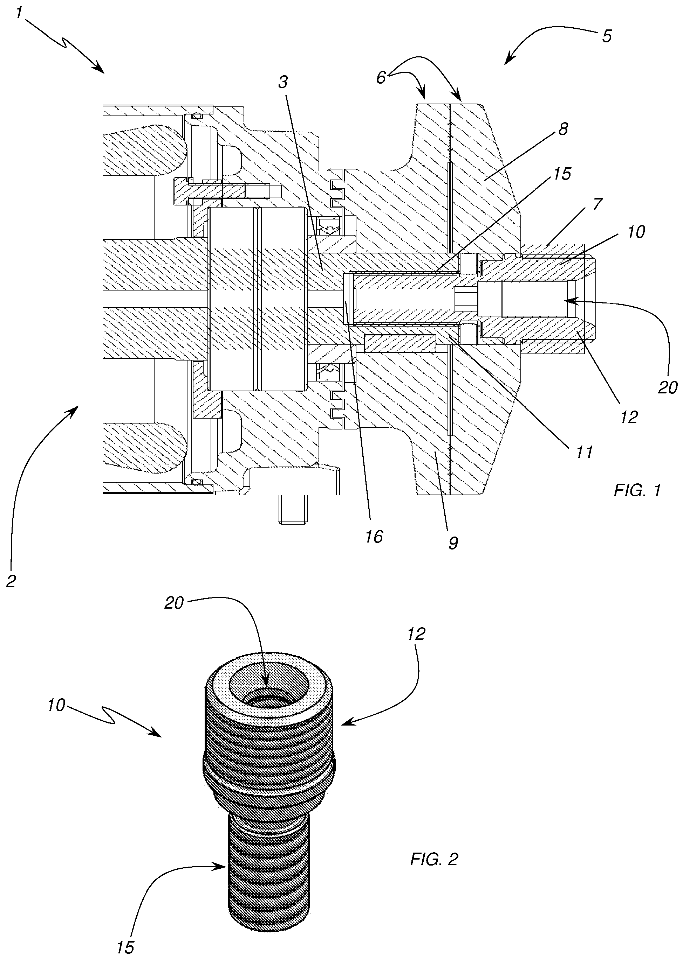

FIG. 1 represents a portion of an electrospindle according to the invention in a sectional view;
FIG. 2 represents a detail of an electrospindle according to the invention in a perspective view.

### Detailed description of some preferred exemplary embodiments

With reference to the mentioned figures, described herein is an electrospindle **1** commonly used for machining operations such as cutting, milling, drilling or other.

By definition, an electrospindle **1** comprises a motor **2** for moving a tool, the latter not represented in the figures, and a motor shaft **3** for transmitting motion from the motor **2** to the tool.

The power of the motor **2** is typically adequate for the use to which the electrospindle **1** is directed and, consequently, also the embodiment of the motor shaft **3** is consequent to the efforts that it must bear. In this sense, the motor shaft **3** is typically made of noble materials and with appropriate machining operations that do not reduce its mechanical seal.

According to an aspect of the invention, the electrospindle **1** comprises a gripping head **5** of the tool. Moreover, this head **5** not only retains the tool, but realizes the coupling between the latter and the motor shaft **3.**

In particular, the head **5** comprises two flanges **6** between which a portion of the tool can be interposed. There is also a thrust nut **7** which has the function of pushing a first flange **8** towards the counterflange **9** so as to hold the tool between them.

According to another aspect of the invention, the electrospindle **1** also comprises an insert **10** coupled by screwing to the free end **11** of the motor shaft **3.**

Typically, the counterflange **9** of the head **5** is integral with the motor shaft **3,** but this detail must not be considered as limiting for the invention.

With respect to the thrust nut **7,** on the other hand, it is coupled to an end portion **12** of the insert **10.**

Advantageously, therefore, the free end **11** of the motor shaft **3** is no longer protruding from the head **5,** as instead occurs in the known art, but the insert **10** is protruding.

Since the thrust nut **7** is screwed onto the insert **10,** in substance, still advantageously, the latter functionally replaces the motor shaft **3,** cooperating in retaining the tool.

Still advantageously, in the event of damage or deterioration, the replacement of the insert **10** is easier and less expensive not only in terms of time for performing such a replacement and of downtime, but also in terms of materials used to make such piece.

Still advantageously, in fact, the insert **10** can be made of the most suitable material for its exposed positioning. In particular, it can be made with a less expensive material than the motor shaft **3** and suitably hardened.

Its coupling by screwing to the motor shaft **3** also allows to obtain an advantageously stable but low-cost coupling.

More in detail, the insert **10** comprises a first threaded end **15** while the free end **11** of the motor shaft **3** comprises a first hole **16** typically but not necessarily blind extending along the longitudinal development axis of the motor shaft **3** and which is counter-shaped on the first end **15** of the insert **10.** Moreover, this first hole **16** is threaded to receive this first end **15** of the insert **10** by screwing.

As stated before, the prior art provides for the operation of different motor shafts **3** in accordance with the combinations of the rotation directions of the motor **2** and of the tools. On the contrary, the present invention advantageously allows to use a single motor shaft **3** and to provide different inserts **10** in accordance with the aforementioned rotation directions. Still advantageously, therefore, the replacement of an insert **10** with another suitable to the new rotation combination is certainly faster and simpler than having to replace the motor shaft **3.**

According to another aspect of the invention, the end portion **12** of the insert **10** is also threaded so as to receive the thrust nut **7** by screwing.

Advantageously, as mentioned, any damage to the thread will only require the replacement of the insert **10** and not of the whole motor shaft **3.**

According to a further aspect of the invention, this thread is double comprising a first right-handed thread and a second left-handed thread.

Advantageously, therefore, both right-handed and left-handed thrust nuts **7** can be screwed onto the same end portion **12** of the insert **10.** In other words, the insert **10** can be used indifferently with right-handed or left-handed tools. This limits, still advantageously, not only the number of components to be provided in the production of the electrospindle **1** of the invention, but also the number of times in which it is necessary to replace the insert **10** itself.

In order to ensure the tightness of the thrust nut **7,** according to an embodiment variant not shown in the figures, the electrospindle comprises two nuts: a first nut with a thread suitable for coupling with the first thread of the end portion of the insert, and a second nut with a thread suitable for coupling with the second thread.

In this way, whatever the direction of rotation imposed by the motor, the tool is correctly held in position since at least one of the first and second nuts will not be urged to unscrew.

Still advantageously, the same tool can be used with both rotation directions, thus speeding up machining and reducing machine downtime.

According to the embodiment which is described, the first nut and the second nut comprise mutual coupling means, but this detail must not be considered limiting for further different embodiment variants.

According to another aspect of the invention, the end portion **12** of the insert **10** also comprises a second hole **20** which is also typically but not necessarily blind, which extends along the longitudinal development axis of the insert **10** itself to receive and retain an additional tool.

This second hole **20** is typically threaded to retain the additional tool by screwing. In the industry jargon, this second tool connection is typically referred to as "half throttle".

An embodiment variant was described just before in which the end portion of the insert has a double thread to ensure the use of both right-handed tools and left-handed tools. In this situation, it is clear that it is preferable that the thread of the second hole is also advantageously double, comprising a third right-handed thread and a fourth left-handed thread so as to be able to screw additional right-handed and left-handed tools.

Advantageously, therefore, with this arrangement, the number of inserts necessary for carrying out different machining operations by means of the electrospindle of the invention is even more reduced. Still advantageously, the causes of replacement of the insert and, therefore, machine downtime, are reduced.

In light of the above, it is therefore understood that the electrospindle of the invention overcomes the drawbacks noted in the prior art.

In particular, the motor shaft is certainly better protected since it does not protrude in any way from the head that holds the tool. In this sense it is protected not only from inappropriate stress and damage, but also from dirt.

On closer inspection, the solution proposed in the present patent application does not even require the replacement of the motor shaft when the combination of the rotation direction of the tool and/or of the motor changes.

Although the invention has been described with particular reference to the accompanying figures, the reference numerals used in the description and claims are used to improve the intelligence of the invention and do not constitute any limitation to the claimed scope of protection.

## Claims

1. An electrospindle comprising a motor (**2**) for moving a tool and a motor shaft (**3**) for transmitting motion from said motor (**2**) to the tool, said electrospindle (**1**) comprising a gripping head (**5**) of the tool to coupling the latter to said motor shaft (**3**), said head (**5**) comprising at least two flanges (**6**) between which is gripped a portion of the tool and at least one thrust nut (**7**) that push a first flange (**8**) of said two flanges (**6**) towards a counterflange (**9**) of said two flanges (**6**) so as to hold the tool in position, said electrospindle (**1**) being **characterized by** comprising an insert (**10**) coupled by screwing to the free end (**11**) of said motor shaft (**3**), said thrust nut (**7**) being coupled on at least one end portion (**12**) of said insert (**10**).

2. Electrospindle according to claim 1, **characterized in that** said insert (**10**) comprises a first threaded end (**15**) and said free end (**11**) of said motor shaft (**3**) comprises a first hole (**16**) which develops according to the longitudinal development axis of said motor shaft (**3**), said first hole (**16**) being shaped on said first end (**15**) of said insert (**10**) and being threaded to receive said first end (**15**) of said insert (**10**) by screwing.

3. Electrospindle according to claim 2, **characterized in that** said end portion (**12**) of said insert (**10**) is threaded so as to receive said at least one thrust nut (**7**) by screwing.

4. Electrospindle according to claim 3, **characterized in that** said thread of said end portion (**12**) of said insert (**10**) is double comprising a first right-handed thread and a second left-hand thread.

5. Electrospindle according to claim 4, **characterized in that** said at least one thrust nut comprises a first nut with a thread suitable for coupling with said first thread of said end portion of said insert and a second nut with a thread suitable for coupling with said second thread of said end portion of said insert.

6. Electrospindle according to claim 3, **characterized in that** said end portion (**12**) of said insert (**10**) comprises a second hole (**20**) which extends along the longitudinal development axis of said insert (**10**) to receive and hold an additional tool.

7. Electrospindle according to claim 6, **characterized in that** said second hole (**20**) is threaded to retain said additional tool by screwing.

8. Electrospindle according to claim 7, **characterized in that** said threading of said second hole (**20**) is double comprising a third right-handed thread and a fourth left-handed thread.

## Patentansprüche

1. Elektrospindel, welche einen Motor (2) zum Bewegen eines Werkzeugs und eine Motorwelle (3) zum Übertragen von Bewegung von dem Motor (2) auf das Werkzeug umfasst, wobei die Elektrospindel (1) einen Spannkopf (5) für das Werkzeug zum Ankoppeln des Letzteren an die Motorwelle (3) umfasst, wobei der Kopf (5) wenigstens zwei Flansche (6), zwischen welchen ein Abschnitt des Werkzeugs eingespannt wird, und wenigstens eine Druckmutter (7), welche einen ersten Flansch (8) von den zwei Flanschen (6) in Richtung eines Gegenflansches (9) von den zwei Flanschen (6) drückt, um so das Werkzeug in seiner Position zu halten, umfasst, wobei die Elektrospindel (1) **dadurch gekennzeichnet ist, dass** sie einen Einsatz (10) umfasst, der durch Zusammenschrauben mit dem freien Ende (11) der Motorwelle (3) gekoppelt ist, wobei die Druckmutter (7) auf wenigstens einem Endabschnitt (12) des Einsatzes (10) angebracht ist.

2. Elektrospindel nach Anspruch 1, **dadurch gekennzeichnet, dass** der Einsatz (10) ein erstes Gewindeende (15) umfasst und das freie Ende (11) der Motorwelle (3) ein erstes Loch (16) umfasst, welches sich entlang der Längserstreckungsachse der Motorwelle (3) erstreckt, wobei das erste Loche (16) dem ersten Ende (15) des Einsatzes (10) entsprechend geformt ist und mit einem Gewinde versehen ist, um das erste Ende (15) des Einsatzes (10) durch Zusammenschrauben aufzunehmen.

3. Elektrospindel nach Anspruch 2, **dadurch gekennzeichnet, dass** der Endabschnitt (12) des Einsatzes (10) mit einem Gewinde versehen ist, um die wenigstens eine Druckmutter (7) durch Zusammenschrauben aufzunehmen.

4. Elektrospindel nach Anspruch 3, **dadurch gekennzeichnet, dass** das Gewinde des Endabschnitts (12) des Einsatzes (10) ein Doppelgewinde ist, das ein erstes Rechtsgewinde und ein zweites Linksgewinde umfasst.

5. Elektrospindel nach Anspruch 4, **dadurch gekennzeichnet, dass** die wenigstens eine Druckmutter eine erste Mutter mit einem Gewinde, das zum Koppeln mit dem ersten Gewinde des Endabschnitts des Einsatzes geeignet ist, und eine zweite Mutter mit einem Gewinde, das zum Koppeln mit dem zweiten Gewinde des Endabschnitts des Einsatzes geeignet ist, umfasst.

6. Elektrospindel nach Anspruch 3, **dadurch gekennzeichnet, dass** der Endabschnitt (12) des Einsatzes (10) ein zweites Loch (20) umfasst, welches sich entlang der Längserstreckungsachse des Einsatzes (10) erstreckt, um ein zusätzliches Werkzeug aufzunehmen und zu halten.

7. Elektrospindel nach Anspruch 6, **dadurch gekennzeichnet, dass** das zweite Loch (20) mit einem Gewinde versehen ist, um das zusätzliche Werkzeug durch Zusammenschrauben festzuhalten.

8. Elektrospindel nach Anspruch 7, **dadurch gekennzeichnet, dass** das Gewinde des zweiten Loches (20) ein Doppelgewinde ist, das ein drittes Rechtsgewinde und ein viertes Linksgewinde umfasst.

## Revendications

1. Électro-broche comprenant un moteur (**2**) pour déplacer un outil et un arbre de moteur (**3**) pour transmettre un mouvement dudit moteur (**2**) à l'outil, ladite électro-broche (**1**) comprenant une tête de préhension (**5**) de l'outil pour coupler ce dernier audit arbre de moteur (**3**), ladite tête (**5**) comprenant au moins deux brides (**6**) entre lesquelles sont agrippées une portion de l'outil et au moins une bague-écrou (**7**) qui poussent une première bride (**8**) desdites deux brides (**6**) vers une contre-bride (**9**) desdites deux brides (**6**) de manière à maintenir l'outil en position, ladite électro-broche (**1**) étant **caractérisée en ce qu'elle** comprend un insert (**10**) couplé par vissage à l'extrémité libre (**11**) dudit arbre de moteur (**3**), ladite bague-écrou (**7**) étant couplée sur au moins une portion d'extrémité (**12**) dudit insert (**10**).

2. Électro-broche selon la revendication 1, **caractérisée en ce que** ledit insert (**10**) comprend une première extrémité filetée (**15**) et ladite extrémité libre (**11**) dudit arbre de moteur (**3**) comprend un premier trou (**16**) qui se développe selon l'axe de développement longitudinal dudit arbre de moteur (**3**), ledit premier trou (**16**) étant façonné sur ladite première extrémité (**15**) dudit insert (**10**) et étant fileté pour recevoir ladite première extrémité (**15**) dudit insert (**10**) par vissage.

3. Électro-broche selon la revendication 2, **caractérisée en ce que** ladite portion d'extrémité (**12**) dudit insert (**10**) est filetée de manière à recevoir ladite au moins une bague-écrou (**7**) par vissage.

4. Électro-broche selon la revendication 3, **caractérisée en ce que** ledit filetage de ladite portion d'extrémité (**12**) dudit insert (**10**) est double comprenant un premier filetage droit et un deuxième filetage gauche.

5. Électro-broche selon la revendication 4, **caractérisée en ce que** ladite au moins une bague-écrou comprend un premier écrou avec un filetage adapté pour se coupler avec ledit premier filetage de ladite portion d'extrémité dudit insert et un second écrou avec un filetage adapté pour se coupler avec ledit deuxième filetage de ladite portion d'extrémité dudit insert.

6. Électro-broche selon la revendication 3, **caractérisée en ce que** ladite portion d'extrémité (**12**) dudit insert (**10**) comprend un second trou (**20**) qui s'étend le long de l'axe de développement longitudinal dudit insert (**10**) pour recevoir et maintenir un outil supplémentaire.

7. Électro-broche selon la revendication 6, **caractérisée en ce que** ledit second trou (**20**) est fileté pour retenir ledit outil supplémentaire par vissage.

8. Électro-broche selon la revendication 7, **caractérisée en ce que** ledit filetage dudit second trou (**20**) est double comprenant un troisième filetage droit et un quatrième filetage gauche.
